# FASCICULE DE BREVET EUROPEEN

(11) **EP 3 671 327 B1**
(45) Date de publication et mention de la délivrance du brevet: **17.02.2021**
(21) Numéro de dépôt: 19214920.1
(22) Date de dépôt: 10.12.2019
(51) Int. Cl.: G02F 1/1333

(54) **ECRAN PLAT A SURFACE D'AFFICHAGE CONTINUE COMPORTANT DEUX CELLULES A CRISTAUX LIQUIDES JOINTIVES**
FLACHBILDSCHIRM MIT DURCHGEHENDER ANZEIGEFLÄCHE, DIE ZWEI NEBENEINANDERLIEGENDE FLÜSSIGKRISTALLZELLEN UMFASST
FLAT SCREEN WITH CONTINUOUS DISPLAY SURFACE COMPRISING TWO CELLS WITH CONTIGUOUS LIQUID CRYSTAL SCREENS

(30) Priorité: 18.12.2018 FR 1872953
(43) Date de publication de la demande: 24.06.2020
(73) Titulaire: Thales, 92400 Courbevoie (FR)
(72) Inventeur: CONI, Philippe, 33127 Saint Jean d'Illac (FR); LEBRUN, Hugues, 38500 Coublevie (FR); CHABOT, Philippe, 33160 St Aubin de Médoc (FR)
(74) Mandataire: Marks & Clerk France

(56) Documents cités:
- US-A1- 2008 079 657
- US-A1- 2009 147 177
- US-A1- 2010 115 807

## Description

Le domaine de l'invention est celui des systèmes à écran plats nécessitant une grande surface d'affichage obtenue au moyen de plusieurs écrans individuels. Un tel système à écran plat est connu, par exemple, du document US 2010/115807 A1. Ce document divulgue un écran pliable comportant deux affichages, par exemple deux cellules à cristaux liquides, une lame transparente et un cadre responsable de la rigidité mécanique de l'écran. La surface d'affichage de l'écran déplié correspond ainsi à la somme des surfaces d'affichage individuelles des cellules à cristaux liquides. De tels écrans pliables sont également connus des documents US 2008/079657 A1 et US 2009/147177 A1. Le domaine privilégié mais non limitatif de l'invention est celui de l'affichage des cockpits d'aéronef.

Dans un certain nombre d'applications, il est nécessaire de disposer de grandes surfaces de visualisation pour présenter l'information indispensable à la gestion et au fonctionnement d'un système complexe. C'est notamment le cas dans les cockpits d'aéronefs où les écrans d'affichage assurent la présentation des informations de pilotage, de navigation et de contrôle des différents systèmes de bord.

Actuellement, dans le domaine aéronautique, on utilise des écrans de taille moyenne, de sorte à regrouper les informations et à réduire le nombre d'instruments. Mais la réduction du nombre d'écrans ne doit pas entraîner de problèmes de disponibilité de l'appareil en cas de panne simple pouvant occasionner simultanément la perte de plusieurs fonctions autrefois réparties sur plusieurs écrans.

La disponibilité des écrans de même nature ne peut pas répondre aux exigences réglementaires de sécurité du vol, compte-tenu du risque de panne commune liée à un défaut pouvant être issu de la conception ou de la fabrication d'un composant défectueux.

Les cockpits d'aéronef comportent un instrument secondaire dit « back-up » qui a la particularité d'être différent des moyens de visualisation primaire, ceci afin d'éviter qu'une panne générique conduise à la perte totale de l'affichage des informations aux pilotes. Cet instrument est généralement plus petit et offre moins de fonctions que le système primaire. Il occasionne une charge de travail supplémentaire aux pilotes lorsque son utilisation devient nécessaire, compte-tenu de sa petite surface d'affichage.

Pour augmenter la surface d'affichage, il est possible de disposer côte à côte deux écrans d'affichage de façon à obtenir une surface plus grande. Il est alors nécessaire que les deux écrans soient physiquement ségrégués pour éviter les problèmes de panne commune. Les seules parties communes sont alors la mécanique et le hublot de protection des écrans, ces points communs étant considérés comme acceptables.

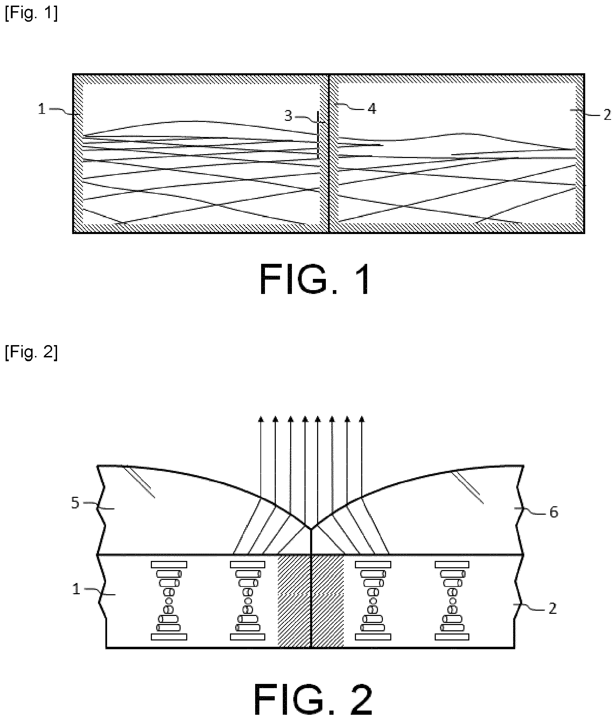

Cette solution présente l'avantage de réaliser à partir de modules élémentaires d'affichage des grandes surfaces d'images. Ainsi, la figure 1 représente un système de présentation d'images comportant deux grands écrans plats 1 et 2 mis côte à côte. Ces écrans sont, par exemple, des écrans à cristaux liquides. Une grande image comme, par exemple, une représentation cartographique, peut être représentée en continu sur les deux écrans. L'inconvénient du système, comme on le voit sur la figure 1, est que, pour des problèmes à la fois mécaniques et électroniques, la zone d'affichage de chaque écran représentée en blanc sur la figure 1 ne couvre pas la totalité de la surface de l'écran. Ainsi, le système de visualisation comporte des bordures inactives 3 et 4 entre les écrans qui barrent l'image affichée dans sa partie centrale. Ces bordures 3 et 4 sont représentées en hachurées sur la figure 1. L'œil humain est très sensible à ce phénomène. Ainsi, non seulement une bordure large de seulement un millimètre reste parfaitement visible, mais la perte d'une seule colonne de la largeur d'un pixel d'une matrice active reste encore visible.

Plusieurs solutions techniques ont été proposées pour corriger ce problème.

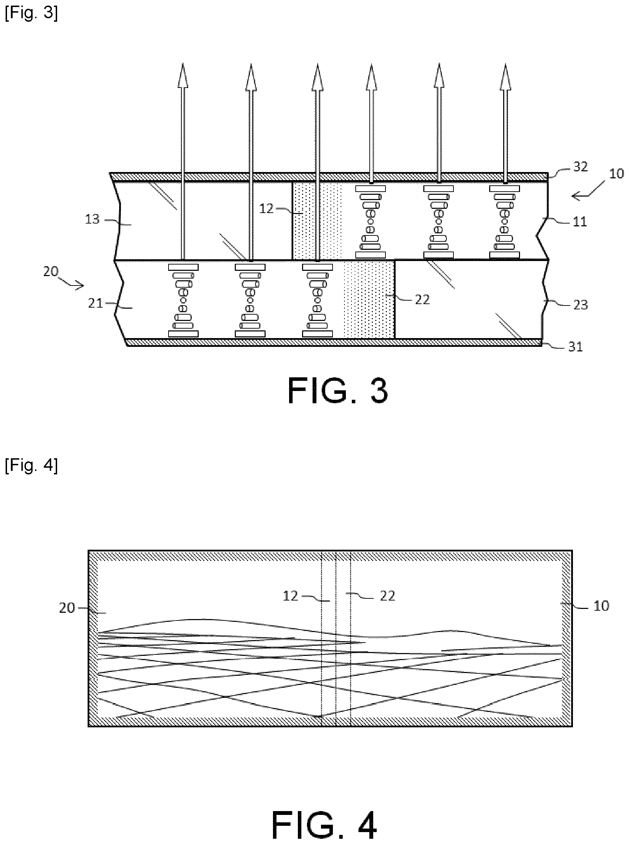

Une première solution représentée en figure 2 est détaillée dans la publication intitulée «Printed cylindrical lens pair for application to the seam concealment in tiled displays » of Department of Electrical and Computer Engineering, Seoul National University, publié dans le journal Optics Express du 22 Janvier 2018. Elle consiste à disposer au-dessus des écrans 1 et 2 dans la zone commune avec l'écran adjacent des lames optiques 5 et 6 dont les bords incurvés forment une image de la surface de visualisation de plus grande dimension, masquant ainsi les bords de l'écran représentées en hachurées sur la figure 2. Sur cette figure et sur la figure 3, les matrices à cristaux liquides sont symbolisées par des hélices de molécules et les rayons lumineux issus des écrans par des flèches. Cette solution permet d'effacer presque totalement l'absence d'image entre les deux écrans lorsque l'on regarde l'image dans l'axe.

On comprend bien que cet effet local d'agrandissement ne saurait cependant donner une image parfaite. En particulier, dès que l'angle de champ augmente, la zone de séparation entre les deux écrans redevient visible. Par ailleurs, le composant optique ajoute une surépaisseur. Cette surépaisseur a deux inconvénients. Elle provoque de la parallaxe et l'interaction tactile est impossible dans la zone de la lame optique.

Une variante de cette solution est décrite dans le brevet US 6 927 908 intitulé « Visual display screen arrangement ». Elle présente peu ou prou les mêmes inconvénients.

Une seconde solution serait d'utiliser des écrans plats à bords courbes tels que mis en œuvre sur certains téléphones portables ou « smartphones ». Ce type d'écran déforme nécessairement les images dans leurs zones courbées.

Le système de visualisation selon l'invention ne présente pas les inconvénients précédents.

Dans la suite de la description, on adopte les définitions suivantes : une cellule à cristaux liquides désigne la cellule de verre comportant le cristal liquide sans polariseurs, l'écran à cristaux liquides désigne la cellule précédente disposée entre polariseurs croisés.

Les cellules à cristaux liquides comportent une surface active composée de pixels actifs et une zone de scellement qui ne comporte pas de pixels actifs. Cette zone présente cependant l'avantage d'être relativement transparente. Lorsqu'elle est placée entre deux polariseurs croisés, étant neutre vis-à-vis de la polarisation de la lumière, elle apparait noire, contrairement au cristal liquide qui polarise la lumière.

Ainsi, si l'on dispose deux cellules à cristaux liquides dans des plans différents de façon que leurs zones de scellement respectives se chevauchent exactement, il est possible d'éclairer la cellule du dessus au travers de la zone de scellement de la cellule du dessous et il est possible de voir la cellule du dessous au travers de la zone de scellement de la cellule du dessus. En plaçant un film polarisant commun aux deux cellules de part et d'autre de celles-ci, on assure ainsi une continuité presque parfaite entre les deux images affichées par chacune des surfaces actives. Dans la mesure où les deux cellules ont des épaisseurs faibles, les différences de hauteur entre les deux cellules peuvent être, par ailleurs, compensées par des lames transparentes, de façon à créer sur chaque face un plan d'altitude uniforme pour faciliter le laminage des films polarisants communs aux deux cellules.

Plus précisément, l'invention a pour objet un écran de visualisation sécurisé comportant au moins deux cellules à cristaux liquides équipées de deux polariseurs communs, la première cellule ayant une première surface active et une première zone de scellement transparente située sur un premier côté de ladite première surface active et la seconde cellule ayant une seconde surface active et une seconde zone de scellement transparente située sur un second côté de ladite seconde surface active, caractérisé en ce que le système comporte :
- dans un premier plan, la première cellule et une première lame transparente de même épaisseur que celle de la première cellule, la première zone de scellement étant située entre la première surface active et la première lame transparente, l'un des deux polariseurs communs laminé sur une face commune à la première cellule et à la première lame transparente ;
- dans un second plan parallèle au premier plan, la seconde cellule et une seconde lame transparente de même épaisseur que celle de la seconde cellule, la seconde zone de scellement étant située entre la seconde surface active et la seconde lame transparente, l'autre des deux polariseurs communs étant laminé sur une face commune à la deuxième cellule et à la deuxième lame ;
- la seconde cellule étant disposée sous la première lame transparente, la seconde lame transparente étant disposée sous la première cellule de sorte que la seconde zone de scellement soit située sous la première surface active et la première zone de scellement soit située sur la seconde surface active, la première surface active étant dans l'exact prolongement de la seconde surface active, chaque zone de scellement se trouvant ainsi superposée à une zone de surface active, assurant ainsi la continuité de l'écran de visualisation.

Avantageusement, les deux zones de scellement comportent exclusivement des espaceurs en forme de colonne, la position desdits espaceurs étant déterminée,
- pour la première zone de scellement, en fonction de l'emplacement des zones opaques de la partie de la seconde surface active de l'écran située sous cette première zone, et
- pour la seconde zone de scellement, en fonction de l'emplacement des zones opaques de la partie de la première surface active de l'écran située sur cette seconde zone.

Avantageusement, les espaceurs des zones de scellement ont des hauteurs identiques à celles des espaceurs de la première surface active ou de la seconde surface active.

Avantageusement, les espaceurs des zones de scellement ont des hauteurs différentes de celles des espaceurs de la première surface active ou de la seconde surface active.

Avantageusement, les zones situées sous la première zone de scellement et sous la seconde zone de scellement sont éclairées par un dispositif d'éclairage de façon à compenser l'absorption et la diffusion lumineuse de la première zone de scellement et de la seconde zone de scellement.

L'invention concerne également un système de visualisation comportant un écran de visualisation tel que défini ci-dessus et un calculateur graphique qui adresse la seconde surface active, les graphiques affichés dans la zone de la seconde surface active située sous la première zone de scellement ont une résolution différente de celle des graphiques affichés sur le reste de la seconde surface active, ladite résolution étant adaptée à la diffusion lumineuse de cette première zone de scellement.

Dans une variante de réalisation, le calculateur graphique comporte une fonction de lissage appliquée aux graphiques affichés dans la zone de la seconde surface active située sous la première zone de scellement, ladite fonction de lissage étant adaptée à la diffusion lumineuse de cette première zone de scellement.

Avantageusement, l'écran de visualisation du système de visualisation comporte une surface tactile disposée sur le premier polariseur.

L'invention sera mieux comprise et d'autres avantages apparaîtront à la lecture de la description qui va suivre donnée à titre non limitatif et grâce aux figures annexées parmi lesquelles :
[Fig.1] représente un système à deux écrans plats selon l'art antérieur ;
[Fig.2] représente un système à deux écrans plats selon l'art antérieur comportant un dispositif optique permettant de réduire la zone morte entre deux écrans adjacents ;
[Fig.3] est une vue en coupe partielle d'un écran de visualisation comportant deux cellules à cristaux liquides selon l'invention ;
[Fig.4] est une vue de face d'un écran de visualisation comportant deux cellules à cristaux liquides selon l'invention ;
[Fig.5] est une vue en coupe partielle de l'écran de visualisation selon l'invention comportant un éclairage adapté.

A titre d'exemple non limitatif, la figure 3 représente une vue en coupe d'un écran de visualisation selon l'invention comportant deux cellules jointives. La figure 3 représente uniquement les deux cellules dans la zone de la jonction.

Il est à noter que le principe de l'invention peut s'appliquer à un plus grand nombre d'écrans. L'architecture finale est cependant limitée par les circuits de commande des lignes situés sur le côté opposé à la zone de scellement.

L'écran de visualisation comporte essentiellement :
- une première cellule 10 à cristaux liquides matriciels rectangulaire. Cette première cellule a une première surface active 11 et une première zone de scellement 12 transparente située sur un premier côté de cette première surface active ;
- une seconde cellule 20 à cristaux liquides matriciels rectangulaire. Cette seconde cellule a une seconde surface active 21 et une seconde zone de scellement 22 transparente située sur un second côté de cette seconde surface active ;
- une première lame de verre 13 plane transparente de même épaisseur que la première cellule ;
- une seconde lame de verre 23 plane transparente de même épaisseur que la seconde cellule ;
- un premier polariseur 31 et un second polariseur 32.

L'invention fonctionne avec tous types de cellules à cristaux liquides. A titre d'exemples non limitatifs, les cellules peuvent être de type :
- TN, acronyme de «Twisted Nematic» ;
- IPS, acronyme de «In Plane Switching» ;
- VA, acronyme de «Vertical Alignement» ;
- PSVA, acronyme de «Polymer Stabilized Vertical Alignement» ;
- AFSS, acronyme de «Active Frequency Selective Surface».

La première cellule 10 et la première lame transparente 13 sont disposées dans un premier plan commun, la première zone de scellement 12 étant située entre la première surface active 11 et la première lame transparente 13.

La seconde cellule 20 et la seconde lame transparente 23 sont disposés dans un second plan commun parallèle au premier plan, la seconde zone de scellement 22 étant située entre la seconde surface active 21 et la seconde lame transparente 23.

La seconde cellule 20 est collée sous la première lame transparente 13, la seconde lame transparente 23 étant collée sous la première cellule écran 10 de sorte que la seconde zone de scellement 22 soit située sous la première surface active 11 et que la première zone de scellement 12 soit située sur la seconde surface active 21 et que la première surface active 11 soit dans l'exact prolongement de la seconde surface active 21 telle que représentées sur la figure 3. Ces différents assemblages ne présentent aucune difficulté technique particulière pour l'homme du métier.

L'ensemble constitué par la première cellule, la première lame transparente, la seconde cellule et la seconde lame transparente est disposé entre les deux polariseurs 31 et 32. De plus, l'écran de visualisation comporte un dispositif d'éclairage disposé sous la seconde cellule et sous la seconde lame transparente et le polariseur 31. Ce dispositif d'éclairage n'est pas représenté sur la figure 3. L'ensemble équipé de son dispositif d'éclairage constitue un écran de visualisation sécurisé.

Il est également possible de déposer une dalle tactile soit sur l'une des cellules, soit sur la totalité de la surface de l'écran de visualisation. On peut également disposer un verre antireflet sur cet ensemble au-dessus du polariseur 32.

Avec cette disposition, l'image générée par la partie de la seconde zone active située sous la première zone de scellement peut être vue puisque cette zone est transparente. La lumière polarisée générée par le dispositif d'éclairage dans la zone située sous la seconde zone de scellement peut passer sans problème à travers cette zone pour éclairer la partie de la première zone active située au-dessus de la seconde zone de scellement. Ainsi, l'image perçue apparaît sans discontinuité comme on peut le voir sur la figure 4 qui représente une vue de face du système de visualisation précédent comportant les deux cellules 10 et 20 à cristaux liquides selon l'invention.

Les deux surfaces actives sont situées, par construction, dans des plans différents. Cependant, la différence de hauteur est nécessairement faible dans la mesure où les cellules sont minces et, par ailleurs, est en grande partie compensée optiquement par les lames transparentes.

Les deux zones de scellement 12 et 22 doivent être les plus transparentes possibles de façon à ne pas perturber les images issues des surfaces actives dans ces zones.

Pour réduire les perturbations optiques dues à un défaut de transmission optique des zones de scellement, il est important de retirer de ces zones ou de masquer dans ces zones tous les objets susceptibles de contribuer à la diffusion de la lumière tels que les «espaceurs» lorsqu'ils sont mélangés de façon aléatoire dans la colle du cordon de scellement sous la forme de bâtonnets ou de billes. Le rôle des espaceurs est de définir l'épaisseur de la zone de scellement. Ils sont généralement en forme de billes ou de bâtonnets encore appelés «rods» et sont distribués dans le cordon de scellement. Il est préférable de les remplacer par des espaceurs en forme de colonnes dont la position est prédéfinie, par exemple, par lithographie ou par sérigraphie sur l'une des deux plaques de verre supportant soit la matrice active soit les filtres colorés et constituant la cellule à cristaux liquides. Ces espaceurs dont la position est alors choisie, peuvent être masqués par une couche métallique de la plaque à filtres colorés de la matrice active et donc invisibles de l'utilisateur et ne contribuant pas à la diffusion de la lumière.

Ces espaceurs peuvent avoir une hauteur différente de ceux de la zone active pour compenser l'absence de filtres colorés dans les zones de scellement. On peut également utiliser des espaceurs de même taille que ceux de la matrice active en disposant une couche couleur dans la zone de scellement.

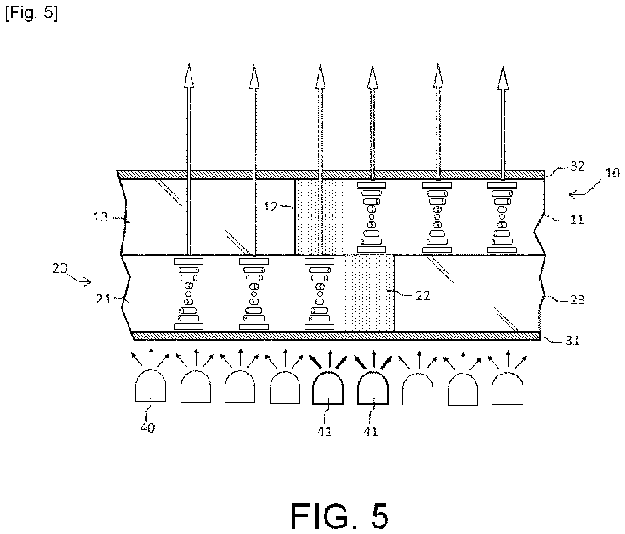

Malgré ces précautions, une différence de transmission dans les zones de scellement peut rester visible. Elle peut se compenser en ajustant soit le gradient du dispositif de rétroéclairage, soit la modulation de la matrice active, soit en ajustant les deux. A titre d'exemple, la figure 5 représente un éclairage à diodes électroluminescentes 40 dans lequel les diodes 41 disposées sous les zones de scellement émettent plus de lumière.

Les zones de scellement peuvent être également légèrement diffusantes. L'aspect diffusant du scellement peut ainsi dégrader la résolution spatiale. Aussi, il est préférable d'éviter d'afficher de petits caractères ou des tracés fin dans ces zones en adoptant une résolution différente dans ces zones. Le calculateur graphique qui adresse les cellules à cristaux liquides peut avantageusement comporter un filtre de lissage diffèrent de type masque flou dans ces zones afin d'éviter de rendre trop visible ce phénomène.

La colle de scellement est choisie pour être la moins diffusante possible, être achromatique et avoir le meilleur taux de transmission possible entre polariseurs parallèles.

Les deux cellules sont avantageusement électriquement indépendantes et peuvent être issus de deux fabricants différents n'utilisant pas les mêmes composants, ni même les mêmes moyens et procédés de fabrication. Il est à noter qu'il n'est même pas nécessaire que les deux cellules aient la même épaisseur. Il est ainsi facile de démontrer qu'une panne affectant une des cellules ne peut avoir de répercussions sur la seconde cellule. C'est un avantage considérable. Cette architecture rend fortement improbable la perte totale de l'écran de visualisation en cas de panne simple ou de panne générique correspondant à un défaut commun entrainant la perte simultanée des équipements de même composition. En ce sens, il s'agit d'un système de visualisation sécurisé.

La disponibilité des informations primaires pour le vol après une panne simple et/ou une panne générique d'un des deux écrans est donc assurée, au moins par l'écran restant fonctionnel, une panne simultanée des deux écrans étant hautement improbable.

On respecte ainsi les objectifs de sécurité des vols propres à l'aéronautique tout en garantissant une grande surface de visualisation.

## Revendications

1. Ecran de visualisation sécurisé comportant au moins deux cellules à cristaux liquides équipées de deux polariseurs communs, la première cellule (10) ayant une première surface active (11) et une première zone (12) de scellement transparente située sur un premier côté de ladite première surface active et la seconde cellule (20) ayant une seconde surface active (21) et une seconde zone (22) de scellement transparente située sur un second côté de la ladite seconde surface active, **caractérisé en ce que** le système comporte :
- dans un premier plan, la première cellule et une première lame transparente (13) de même épaisseur que celle de la première cellule, la première zone de scellement étant située entre la première surface active et la première lame transparente, l'un (32) des deux polariseurs communs étant laminé sur une face commune à la première cellule et la première lame transparente ;
- dans un second plan parallèle au premier plan, la seconde cellule et une seconde lame transparente (23) de même épaisseur que celle de la seconde cellule, la seconde zone de scellement étant située entre la seconde surface active et la seconde lame transparente, l'autre (31) des deux polariseurs communs étant laminé sur une face commune à la deuxième cellule et à la deuxième lame ;
- la seconde cellule étant disposée sous la première lame transparente, la seconde lame transparente étant disposée sous la première cellule de sorte que la seconde zone de scellement soit située sous la première surface active et la première zone de scellement soit située sur la seconde surface active, la première surface active étant dans l'exact prolongement de la seconde surface active, chaque zone de scellement se trouvant ainsi superposée à une zone de surface active, assurant ainsi la continuité de l'écran de visualisation.

2. Ecran de visualisation selon la revendication 1, **caractérisé en ce que** les deux zones de scellement comportent exclusivement des espaceurs en forme de colonne, la position desdits espaceurs étant déterminée,
- pour la première zone de scellement, en fonction de l'emplacement des zones opaques de la partie de la seconde surface active de la cellule située sous cette première zone, et
- pour la seconde zone de scellement, en fonction de l'emplacement des zones opaques de la partie de la première surface active de la cellule située sur cette seconde zone.

3. Ecran de visualisation selon la revendication 2, **caractérisé en ce que** les espaceurs des zones de scellement ont des hauteurs identiques à celles des espaceurs de la première surface active ou de la seconde surface active.

4. Ecran de visualisation selon la revendication 2, **caractérisé en ce que** les espaceurs des zones de scellement ont des hauteurs différentes de celles des espaceurs de la première surface active ou de la seconde surface active.

5. Ecran de visualisation selon l'une des revendications précédentes, **caractérisé en ce que** les zones situées sous la première zone de scellement et sous la seconde zone de scellement sont éclairées par un dispositif d'éclairage (40) de façon à compenser l'absorption et la diffusion lumineuse de la première zone de scellement et de la seconde zone de scellement.

6. Système de visualisation comportant un écran de visualisation selon l'une des revendications précédentes, **caractérisé en ce que** le système de visualisation comporte au moins un calculateur graphique qui adresse la seconde surface active, les graphiques affichés dans la zone de la seconde surface active située sous la première zone de scellement ont une résolution différente de celle des graphiques affichés sur le reste de la seconde surface active, ladite résolution étant adaptée à la diffusion lumineuse de cette première zone de scellement.

7. Système de visualisation comportant un écran de visualisation selon l'une des revendications 1 à 5, **caractérisé en ce que** le système de visualisation comporte au moins un calculateur graphique qui adresse la seconde surface active, le calculateur graphique comporte une fonction de lissage appliquée aux graphiques affichés dans la zone de la seconde surface active située sous la première zone de scellement, ladite fonction de lissage étant adaptée à la diffusion lumineuse de cette première zone de scellement.

8. Système de visualisation selon l'une des revendications 6 ou 7, **caractérisé en ce que** l'écran de visualisation comporte une surface tactile disposée sur le premier polariseur.

## Patentansprüche

1. Gesicherter Anzeigebildschirm, umfassend mindestens zwei Flüssigkristallzellen, ausgerüstet mit zwei gemeinsamen Polarisatoren, wobei die erste Zelle (10) eine erste aktive Oberfläche (11) und einen ersten transparenten Versiegelungsbereich (12) besitzt, welcher an einer ersten Seite der ersten aktiven Oberfläche befindlich ist, und wobei die zweite Zelle (20) eine zweite aktive Oberfläche (21) und einen zweiten transparenten Versiegelungsbereich (22) besitzt, welcher an einer zweiten Seite der zweiten aktiven Oberfläche befindlich ist, **dadurch gekennzeichnet, dass** das System Folgendes umfasst:
- in einer ersten Ebene, die erste Zelle und ein erstes transparentes Blatt (13) gleicher Stärke wie diejenige der ersten Zelle, wobei der erste Versiegelungsbereich zwischen der ersten aktiven Fläche und dem ersten transparenten Blatt befindlich ist, wobei einer (32) der beiden gemeinsamen Polarisatoren auf eine gemeinsame Seite der ersten Zelle und des ersten transparenten Blattes laminiert ist;
- in einer zweiten Ebene, welche parallel zur ersten Ebene ist, die zweite Zelle und ein zweites transparentes Blatt (23) gleicher Stärke wie diejenige der zweiten Zelle, wobei der zweite Versiegelungsbereich zwischen der zweiten aktiven Fläche und dem zweiten transparenten Blatt befindlich ist, wobei der andere (31) der beiden gemeinsamen Polarisatoren auf eine gemeinsame Seite der zweiten Zelle und des zweiten Blattes laminiert ist;
- wobei die zweite Zelle unter dem ersten transparenten Blatt angeordnet ist, das zweite transparente Blatt unter der ersten Zelle in einer Weise angeordnet ist, dass der zweite Versiegelungsbereich unter der ersten aktiven Oberfläche befindlich ist und der erste Versiegelungsbereich über der zweiten aktiven Oberfläche befindlich ist, wobei die erste aktive Oberfläche in der genauen Verlängerung der zweiten aktiven Oberfläche ist, wodurch sich jeder Versiegelungsbereich einer aktiven Oberfläche überlagert befindet, wodurch die Durchgängigkeit des Anzeigebildschirms sichergestellt wird.

2. Anzeigebildschirm nach Anspruch 1, **dadurch gekennzeichnet, dass** die beiden Versiegelungsbereiche ausschließlich Abstandhalter in Form von Spalten umfassen, wobei die Position der Abstandhalter bestimmt ist,
- für den ersten Versiegelungsbereich, angesichts der Position der undurchsichtigen Bereiche des Teils der zweiten aktiven Oberfläche der unter diesem ersten Bereich befindlichen Zelle, und
- für den zweiten Versiegelungsbereich, angesichts der Position der undurchsichtigen Bereiche des Teils der ersten aktiven Oberfläche der über diesem zweiten Bereich befindlichen Zelle.

3. Anzeigebildschirm nach Anspruch 2, **dadurch gekennzeichnet, dass** die Versiegelungsbereiche Höhen besitzen, welche identisch mit denjenigen der Abstandhalter der ersten aktiven Oberfläche oder der zweiten aktiven Oberfläche sind.

4. Anzeigebildschirm nach Anspruch 2, **dadurch gekennzeichnet, dass** die Versiegelungsbereiche Höhen besitzen, welche sich von denjenigen der Abstandhalter der ersten aktiven Oberfläche oder der zweiten aktiven Oberfläche unterscheiden.

5. Anzeigebildschirm nach einem der vorhergehenden Ansprüche, **dadurch gekennzeichnet, dass** die unter dem ersten Versiegelungsbereich und unter dem zweiten Versiegelungsbereich befindlichen Bereiche durch eine Beleuchtungsvorrichtung (40) in einer Weise beleuchtet werden, dass die Absorption und die Diffusion von Licht des ersten und des zweiten Versiegelungsbereichs kompensiert werden.

6. Anzeigesystem, umfassend einen Anzeigebildschirm nach einem der vorhergehenden Ansprüche, **dadurch gekennzeichnet, dass** das Anzeigesystem mindestens einen grafischen Rechner umfasst, welcher die zweite aktive Oberfläche adressiert, wobei die in demjenigen Bereich der zweiten aktiven Oberfläche angezeigten Grafiken, welcher sich unter dem ersten Versiegelungsbereich befindet, eine Auflösung aufweisen, welche sich von derjenigen der Grafiken unterscheidet, welche auf dem Rest der zweiten aktiven Oberfläche angezeigt werden, wobei die Auflösung an die Lichtdiffusion dieses ersten Versiegelungsbereichs angepasst ist.

7. Anzeigesystem, umfassend einen Anzeigebildschirm nach einem der Ansprüche 1 bis 5, **dadurch gekennzeichnet, dass** das Anzeigesystem mindestens einen grafischen Rechner umfasst, welcher die zweite aktive Oberfläche adressiert, wobei der grafische Rechner eine Glättungsfunktion umfasst, welche auf die in dem Bereich der zweiten aktiven Oberfläche angezeigten Grafiken angewandt wird, welche sich unter dem ersten Versiegelungsbereich befindet, wobei die Glättungsfunktion an die Lichtdiffusion dieses ersten Versiegelungsbereichs angepasst ist.

8. Anzeigesystem nach einem der Ansprüche 6 oder 7, **dadurch gekennzeichnet, dass** der Anzeigebildschirm eine taktile Oberfläche besitzt, welche an dem ersten Polarisator angeordnet ist.

## Claims

1. A secure display screen comprising at least two liquid crystal cells equipped with two common polarisers, the first cell (10) having a first active surface (11) and a first transparent sealing zone (12) located on a first side of said first active surface and the second cell (20) having a second active surface (21) and a second transparent sealing zone (22) located on a second side of said second active surface, **characterised in that** the system comprises:
- in a first plane, the first cell and a first transparent strip (13) that is the same thickness as the first cell, the first sealing zone being located between the first active surface and the first transparent strip, one (32) of the two common polarisers being laminated on a face common to the first cell and to the first transparent strip;
- in a second plane parallel to the first plane, the second cell and a second transparent strip (23) that is the same thickness as the second cell, the second sealing zone being located between the second active surface and the second transparent strip, the other one (31) of the two common polarisers being laminated on a face common to the second cell and to the second strip;
- the second cell being disposed under the first transparent strip, the second transparent strip being disposed under the first cell so that the second sealing zone is located under the first active surface and the first sealing zone is located on the second active surface, the first active surface being in the exact extension of the second active surface, each sealing zone thus being overlaid on an active surface zone, thus ensuring the continuity of the display screen.

2. The display screen as claimed in claim 1, **characterised in that** the two sealing zones exclusively comprise column shaped spacers, the position of said spacers being determined:
- for the first sealing zone, as a function of the location of the opaque zones of the part of the second active surface of the cell located under this first zone; and
- for the second sealing zone, as a function of the location of the opaque zones of the part of the first active surface of the cell located on this second zone.

3. The display screen as claimed in claim 2, **characterised in that** the heights of the spacers of the sealing zones are identical to those of the spacers of the first active surface or of the second active surface.

4. The display screen as claimed in claim 2, **characterised in that** the heights of the spacers of the sealing zones are different to those of the spacers of the first active surface or of the second active surface.

5. The display screen as claimed in any one of the preceding claims, **characterised in that** the zones located under the first sealing zone and under the second sealing zone are illuminated by a lighting device (40) so as to compensate for the luminous absorption and diffusion of the first sealing zone and of the second sealing zone.

6. A display system comprising a display screen as claimed in any one of the preceding claims, **characterised in that** the display system comprises at least one graphic computer that addresses the second active surface, the graphics displayed in the zone of the second active surface located under the first sealing zone have a resolution that is different to that of the graphics displayed on the rest of the second active surface, said resolution being adapted to the luminous diffusion of this first sealing zone.

7. The display system comprising a display screen as claimed in any one of claims 1 to 5, **characterised in that** the display system comprises at least one graphic computer that addresses the second active surface, the graphic computer comprises a smoothing function applied to the graphics displayed in the zone of the second active surface located under the first sealing zone, said smoothing function being adapted to the luminous diffusion of this first sealing zone.

8. The display system as claimed in any one of claims 6 or 7, **characterised in that** the display screen comprises a touch-sensitive surface disposed on the first polariser.
